Europäisches Patentamt

European Patent Office

Office européen des brevets

(19)

(11) Veröffentlichungsnummer: **0 102 927**
**B1**

(12) # EUROPÄISCHE PATENTSCHRIFT

(45) Veröffentlichungstag der Patentschrift :
30.07.86

(51) Int. Cl.⁴ : **B 23 K 11/14**

(21) Anmeldenummer : 83810392.7

(22) Anmeldetag : 30.08.83

(54) Buckelanordnung zum Mehrfachbuckelschweissen und ein Verfahren zum Mehrfachbuckelschweissen.

(30) Priorität : 03.09.82 CH 5244/82

(43) Veröffentlichungstag der Anmeldung :
14.03.84 Patentblatt 84/11

(45) Bekanntmachung des Hinweises auf die Patenterteilung : 30.07.86 Patentblatt 86/31

(84) Benannte Vertragsstaaten :
AT BE CH DE FR GB IT LI LU NL SE

(56) Entgegenhaltungen :
DE-A- 1 565 610
FR-A- 1 139 189

(73) Patentinhaber : ELPATRONIC AG
Baarerstrasse 117
CH-6300 Zug (CH)

(72) Erfinder : Opprecht, Jürg
15 Argyle Place
Briarcliff Manor N.Y. 10510 (US)

(74) Vertreter : Hotz, Klaus, Dipl.-El.-Ing. / ETH
c/o SOUDRONIC AG Industriestrasse 35 Postfach 11
CH-8962 Bergdietikon (CH)

EP 0 102 927 B1

Jouve, 18, rue St-Denis, 75001 Paris, France

## Beschreibung

Die Erfindung betrifft eine Buckelanordnung zum Mehrfachbuckelschweissen von zwei im wesentlichen gleich dicken Werkstücken aus Stahl, rostfreiem Stahl, Aluminium, Messing oder beschichteten Metallen, insbesondere zum Schweissen von langgestreckten oder grossflächigen Tiefziehteilen mit einer Mehrzahl von in den Werkstücken hohl eingeprägten Buckeln und ein Verfahren zum Mehrfachbuckelschweissen von Werkstücken aus Stahl, rostfreiem Stahl, Aluminium, Messing oder beschichteten Metallen, insbesondere zum Schweissen von langgestreckten oder grossflächigen Tiefziehteilen, an welchen buckelförmige Erhebungen vorgesehen sind.

Beim herkömmlichen Buckelschweissen von Blechen wird eines der beiden Bleche in bekannter Weise mit Erhebungen, z. B. Ring- oder Rundbuckeln versehen, welche auf der dem gegenüberliegenden Blech zugewendeten Seite vorstehen und eine klar definierte Kontakt- und Schweissfläche darstellen. Zum Verschweissen der Bleche werden auf den Aussenseiten, der Bleche im Bereich der Buckel Elektroden in Anlage gebracht, gegeneinandergepresst und mit Strom beaufschlagt.

Zur Erzeugung einer einwandfreien Schweissung müssen einerseits die Elektrodenflächen genau parallel zueinander wie auch zur Blechoberfläche liegen und die Scheitel der Buckel müssen in ihrer gesamten Ausdehnung auf dem Gegenblech anliegen, um Spritzer von flüssigem Metall zu verhindern. Des weiteren muss sichergestellt sein, dass die Werkstücke sich nur an den Buckeln berühren.

Diese Bedingungen können erfüllt werden, wenn die zu verschweissenden Bleche von geringer Ausdehnung und eben sind, und sich damit beim Vorpressen und beim Schweissen lotrecht nähern. Wenn hingegen zwei langgestreckte und/oder nichtebene Blechteile, z. B. Tiefziehteile im Automobil- oder Apparatebau miteinander verschweisst werden sollen, liegen die Kraft-Richtungen durch die verschiedenen Buckel nicht immer senkrecht zum Werkstück, und es können mangelhafte Schweissverbindungen entstehen, weil die Buckel unsymmetrischer Belastung ausgesetzt werden und dadurch die Stromverteilung über alle Buckel nicht gleich ist. Mit einzeln gefedert gelagerten Elektroden konnten diese Ungenauigkeiten teilweise ausgeglichen werden.

Gerade bei langgestreckten und grossflächigen Werkstücken, bei denen eine grosse Zahl von Buckeln eingeprägt werden muss, ist es zudem sehr schwierig alle Buckel völlig identisch, insbesondere mit genau gleicher Höhe herzustellen. Wenn einzelne Buckel zu geringe Höhe aufweisen, ist mit ungleichen Schweisslinsen und Festigkeiten zu rechnen.

Andererseits können die Buckel auch nicht beliebig hoch ausgeführt werden, weil vor allem bei Al und dessen Legierungen bei der Verformung Risse der Buckelflanken auftreten können. Dies kann ebenfalls zu minderwertigen Schweissungen führen. Auch muss der Buckel eine genügende Festigkeit haben, dass er unter Einfluss der Vorpresskraft nicht einfach zusammenfällt.

Ungleich hohe Buckel wie auch ungenau geformte Werkstücke weisen ähnliche Nachteile auf, durch beide können Nebenschlüsse entstehen und sich unbrauchbare Schweissungen ergeben.

Mit verschiedenartigen Buckelformen wie verschiedenartigen Elektrodenformen und -lagerungen wurde versucht, diesen Problemen beizukommen.

Aus der DE-A-28 09 197 ist bekannt geworden, die Elektrodenaufsetzfläche mit Erhebungen zu versehen, dass in der Anfangsphase, zu Beginn des Schweissdruckaufbaues die Kontaktfläche nur als Linie oder schmaler Streifen, z. B. als Ring, Stern etc. mit der Blechoberfläche in Berührung kommt und erst mit zunehmender Stromflussdauer breiter und grösser wird.

Die Anordnung gewährleistet einen guten Kontakt zwischen der Elektrode und dem Blech. Ungelöst bleiben hingegen die Probleme, welche an der Schweissstelle zwischen den Blechen auftreten, wenn die zu verschweissenden Flächen nicht plan zueinander liegen und zudem zusätzlich noch Schubbewegungen zwischen den Blechen während des Schweissvorganges vorkommen.

Das Verschweissen von zwei Tiefziehteilen mit fertigungstechnisch bedingten Toleranzen kann mit profilierten Elektroden nicht sicher durchgeführt werden.

Des weiteren treten an den schmalen Berührungslinien der Elektroden mit der Blechoberfläche grosse Stromkonzentrationen auf, die zu örtlicher Ueberhitzung der Werkstücke auf deren Aussenseite und zu grossem Elektrodenverschleiss führen.

Es ist auch bereits bekannt, beim Verschweissen von kleinen Stanzteilen beide Teile mit buckelartigen Erhebungen zu versehen, deren Scheitellinien sich kreuzen. Dabei weisen die Erhebungen auf dem einen Werksütck eine Scheitellinienlänge auf, welche diejenige auf dem zweiten Werkstück um ein Mehrfaches übertrifft. Auf diese Weise lassen sich mit geringem Strom an den Kreuzstellen der Erhebungen kleine Schweisslinsen bilden, welche die beiden Werkstücke dauerhaft verbinden, sie aber annähernd in einem durch die Höhe der längeren Erhebungen bestimmten gegenseitigen Abstand halten.

Die CH-A-335 772 offenbart ein Verfahren zur Herstellung einer Schweissverbindung zwischen einander überlappenden Blechstreifen, z. B. Radiatoren und Radfelgen.

Auf den aufeinanderzuschweissenden, aus einem Blechstreifen gefalteten Metalloberflächen werden massive Vorsprünge in der Form einer Reihe paralleler linienförmiger Riffelungen durch Walzung eingeprägt, welche nach dem Aufeinandersetzen der Teile, bzw. der Faltung die benachbarten Vorsprünge oder Riffelungen kreuzen.

Beim Schweissen zwischen zwei Rollenelektroden einer Nahtschweissmaschine werden die Erhöhungen an den Kreuzungspunkten miteinander verbunden. Es entsteht auf diese Weise eine aus vielen kleinen Einzelschweisspunkten bestehende Schweissverbindung, welche für den beschriebenen Anwendungszweck (Radfelgen) sicher zweckmässig sein kann.

Tiefziehteile, insbesondere solche, die nicht ebene Schweissflächen aufweisen, können nicht in der angegebenen Weise geschweisst werden, weil das Anbringen einer Riffelung unmöglich ist.

Des weiteren ist aus der DE-A-1 565 810 ein Verfahren und eine Anordnung bekannt, bei denen ein Metallteil grosser Dicke mit einem solchen geringer Dicke verschweisst wird. Dazu wird vorgeschlagen, das starke Metallteil mit Rippen oder Relieflinien zu versehen und das dünne Metallteil gegebenenfalls so zu gestalten, dass es lediglich von Teilen oder Abschnitten der Relieflinien oder Rippen berührt wird. Jedenfalls müssen die beiden ungleichen Metallteile immer in linienförmiger gegenseitiger Berührung stehen, damit eine einwandfreie Verschweissung erfolgen kann. Tiefziehteile mit zwangsläufig auftretenden Unstetigkeiten können in der vorgeschlagenen Weise nicht sicher verschweisst werden.

Die Aufgabe der vorliegenden Erfindung besteht folglich darin, ein Verfahren zum Mehrfach-Buckelschweissen von Werkstücken grosser Längenausdehnung oder Flächenausdehnung, bei welchen die Buckel zudem in verschieden zueinander geneigten Ebenen liegen können, zu finden.

Eine weitere Aufgabe der Erfindung besteht insbesondere auch darin, das Verfahren so auszugestalten, dass eine zuverlässige Verschweissung von ungenau hergestellten bzw. gepaarten Werkstücken möglich ist.

Diese Aufgaben werden nach der erfindungsgemässen Buckelanordnung dadurch gelöst, dass den Buckeln auf dem ersten Werkstück ein im wesentlichen gleichartiger Buckel auf dem zweiten Werkstück gegenüberliegend vorgesehen ist, wobei sich die Scheitellinien der Buckel des zweiten Werkstückes und die Scheitellinien der Buckel des ersten Werkstückes kreuzen und in gegenseitiger punktförmiger Berührung stehen und das erfindungsgemässe Verfahren zeichnet sich dadurch aus, dass (a) die Werkstücke derart zusammengefügt werden, dass die Buckel anfänglich in punktförmige gegenseitige Berührung gelangen, (b) auf den Aussenseiten der Werkstücke im Bereich der Buckel Elektroden in Anlage gebracht werden, (c) die Elektroden mit Druck beaufschlagt und mit einer Stromquelle verbunden werden, (d) die Buckel ausgehend von der punktförmigen Berührungsfläche unter Einwirkung des Druckes mit zunehmender Stromflussdauer, längs deren Scheitel aufschmelzen und (e) eine die Ausdehnung der Buckelgrundflächen beider Buckel umfassende Schweisslinse bilden.

Weitere bevorzugte Ausführungsformen sind den abhängigen Ansprüchen zu entnehmen.

Nach dem Verfahren gemäss der Erfindung können Werkstücke grösserer Ausdehnung zuverlässig geschweisst werden, ohne dass sehr hohe Anforderungen an die Fertigungsgenauigkeit gestellt werden müssen.

Ein weiterer Vorteil der Erfindung besteht darin, dass Werkzeuge grosser Längenausdehnung in einem Arbeitsgang geschweisst werden können.

Ein weiterer Vorteil der Erfindung besteht darin, dass zu Beginn der Schweissung mit niedrigem Strom geschweisst werden kann, weil die Aufschmelzung dank kleiner Kontaktfläche zwischen den Buckeln einerseits und geringer Wärmeabfuhr von der Schweissstelle auf die Elektroden andererseits begünstigt wird.

Ein weiterer Vorteil der Erfindung besteht darin, dass an beiden Werkstücken gleiche Verhältnisse bezüglich der Formänderung der Buckel, der Wärmeeinwirkung und Stromkonzentration während des Schweissvorganges vorliegen. Dies führt zur Bildung von in der Grösse und Qualität gleicher Schweisslinsen.

Ein weiterer Vorteil der Erfindung besteht darin, dass die beidseitig vorgesehenen Buckel einen doppelten Abstand zwischen den Blechen gegenüber den herkömmlichen Anordnungen bewirken und dadurch Nebenschüsse mit allen negativen Folgen während der Schweisslinsenbildung weitgehend verhindert werden können.

Ein weiterer Vorteil der Erfindung besteht darin, dass nebst Eisenmetallen auch Aluminiumteile, Messing, rostfreier Stahl sowie beschichtete Werkstücke buckelgeschweisst werden können.

Ein weiterer Vorteil der Erfindung besteht darin, dass an komplizierten Werkstücken, z. B. Rohrbögen bei welchen der Einsatz von Rollenelektroden äusserst schwierig ist, trotzdem dichte Schweissnähte erzeugt werden können.

Anhand illustrierter Ausführungsbeispiele wird die Erfindung näher beschrieben. Es zeigen:

Figur 1 zwei miteinander zu verschweissende Werkstücke

Figur 2 Längsbuckel, längs geprägt

Figur 3 einen Querschnitt durch einen Buckel gemäss Fig. 2

Figur 4 Längsbuckel quergeprägt,

Figur 5 einen Querschnitt durch einen Buckel gemäss Fig. 4,

Figur 6 und 8 eine Darstellung der Buckel gemäss Fig. 2 bis 5 in Schweisslage übereinanderliegend,

Figur 7 und 9 einen Querschnitt durch die Darstellung gemäss Fig. 6 und 8,

Figur 10 ein Detail aus Fig. 1 in ungeschweisstem Zustand,

Figur 11 eine Darstellung von Fig. 10 nach dem Schweissen,

Figur 12 eine perspektivische Darstellung eines Rohrbogens,

Figur 13 eine Aufsicht auf die unverschweissten Bogenhalbschalen,

Figur 14 einen Ausschnitt aus einem Längsschnitt Längslinie XIV-XIV in Fig. 12.

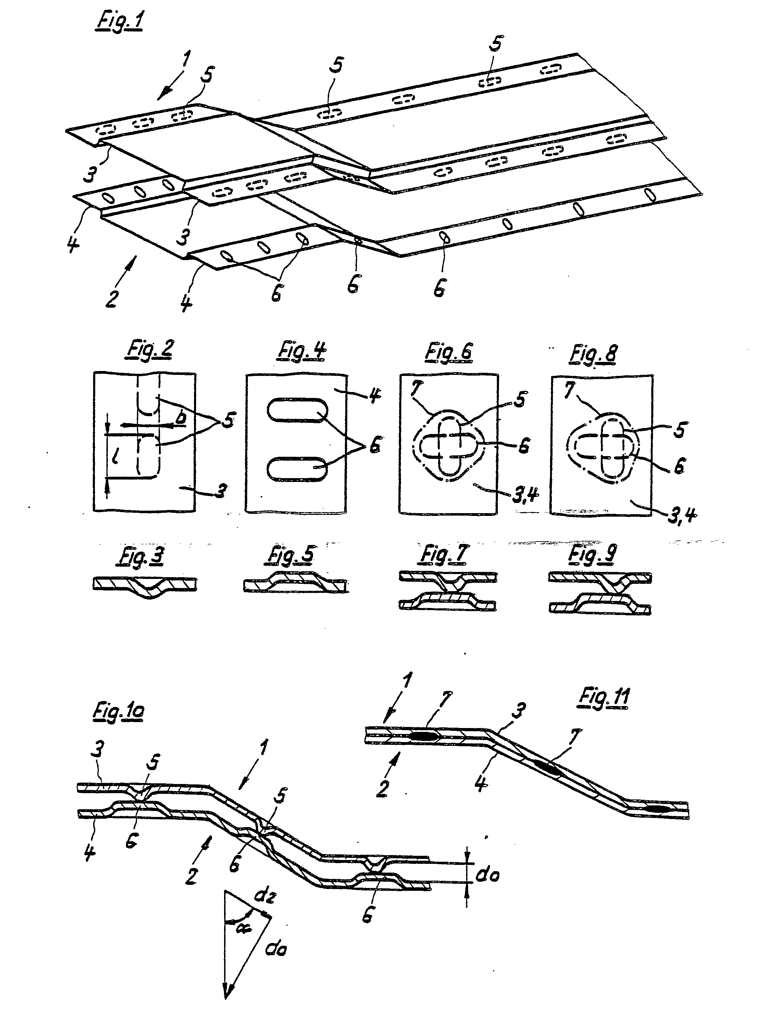

In Fig. 1 sind zwei Werkstückteile 1 und 2 dargestellt, welche durch Mehrfach-Buckelschweissung in einem einzigen Arbeitsgang mit einer Schweisspresse miteinander verschweisst werden sollen. Die Verschweissung erfolgt in den flanschartigen Bereichen 3, 4, die im wesentlichen parallel zueinander liegen, jedoch bedingt durch Fertigungstoleranzen beim Biegen und/oder Tiefziehen nie ganz genau parallel liegen können.

In die Flanschen 3 des Teiles 1 sind parallel zu den Kanten der Flanschen 3 verlaufende erste Buckel 5 (Fig. 1, 2, 3), in die Flanschen 4 des Teiles 2 sind zweite Buckel 6, die rechtwinklig zu den ersten Buckeln 5 verlaufen (Fig. 1, 4, 5) eingeprägt. Die ersten Buckel 5 und zweiten Buckel 6 sind von raupenförmiger langgestreckter Gestalt (Langbuckel) und können im gleichen Arbeitsgang mit der Verformung bzw. Herstellung der beiden Teile 1 und 2 erzeugt worden sein. Das Verhältnis der Länge zur Breite der ersten Buckel 5 und zweiten Buckel 6 an deren Basis ist vorzugsweise zwischen 1,5 und 4. Die Buckelhöhe entspricht den bei Ring- und Rundbuckeln gebräuchlichen Werten (z. B. VDI-Tabellenwerte).

Selbstverständlich können die zweiten Buckel 6 auf in einem anderen als dem rechten Winkel zu den Flanschenkanten oder abwechslungsweise quer und längs liegen. Vorzugsweise sollten hingegen die korrespondierenden ersten Buckel 5 im wesentlichen rechtwinklig zu den zweiten Buckeln 6 verlaufen.

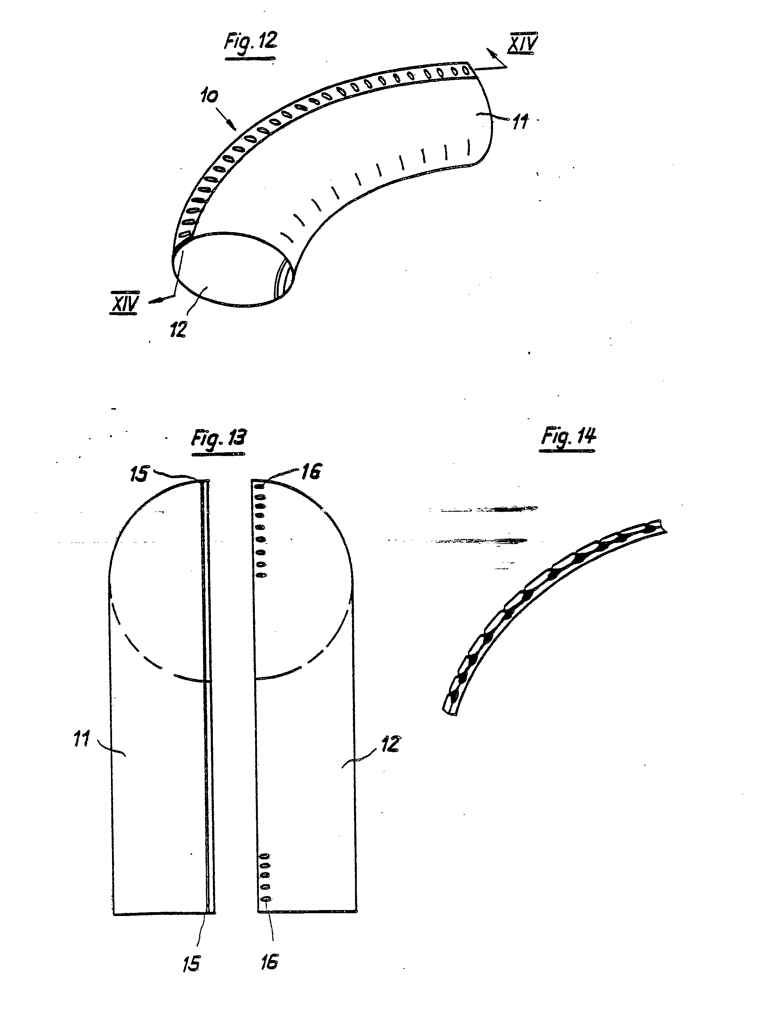

Die Fig. 6 bis 9 zeigen in vergrössertem Massstab die Lage der ersten Buckel 5 und zweiten Buckel 6, wenn die Teile 1 und 2 vor dem Schweissen zusammengebracht worden sind. Die ersten Buckel 5 und zweiten Buckel 6 liegen in Fig. 6, 7 exakt symetrisch sich kreuzend übereinander, in Fig. 8, 9 ist die gegenseitige Lage unsymetrisch. Dies hat, solange als noch eine kreuzende Berührung der Scheitelbereiche der Buckel 5, 6 vorliegt, keinen Einfluss auf die Schweissqualität.

In der Querschnittdarstellung der beiden zusammengefügten noch ungeschweissten Teile 1 und 2 (Fig. 10) ist die gegenseitige Lage der ersten Buckel 5 und zweiten Buckel 6 nochmals ersichtlich. Die sich gegenüberliegenden Oberflächen der beiden Teile 1 und 2 weisen einen Abstand $d_0$ von beispielsweise 2,2 mm ($d_0$ = Höhe der ersten und zweiten Buckel) auf. In den geneigt zu den in der Figur horizontal liegenden Bereichen der Teile 1 und 2 beträgt der Abstand ebenfalls $d_0$, Parallelität der Teile 1 und 2 vorausgesetzt.

Beim Schweissen werden die ersten Buckel 5 und die zweiten Buckel 6 in der Anfangsphase vor Beginn des Stromflusses durch die Elektroden vorerst gegeneinander gepresst und kommen in eine punktförmige Berührung. Eine geringe Verkleinerung des Abstand $d_0$ ist dabei unvermeidlich. Mit zunehmender Stromflussdauer bildet sich aus der Kontaktfläche — anfänglich punktförmig — infolge der hohen Stromkonzentration eine flüssige Schweisslinse. Sie vergrössert sich mit zunehmender Stromstärke und Stromflussdauer und weitet sich über das gesamte, von den Buckeln 5 und 6 als Diagonale gebildete Viereck 7 aus.

Im horizontalen Bereich werden die Buckel 5, 6 lotrecht zur Werkstücksebene zusammengedrückt; in der geneigten Fläche kommt zu dieser ersten, nämlich der Kraftrichtung der Elektroden parallelen Verschiebung, eine zweite Verschiebung $d_2$ ($d_2 = d_0 \cdot \cot \alpha$) hinzu, welche parallel zu der geneigten Werkstücksebene verläuft. Allerdings sollte der Winkel $\alpha$ mindestens 60°-70° betragen. Die Verschiebung $d_2$ bewirkt eine Veränderung der gegenseitigen geometrischen Lage der beiden Buckel 5, 6. Als Lang- oder Strichbuckel kann diese Verschiebung $d_2$ aufgenommen werden, ohne dass dabei die Qualität der Schweissung leidet. Im Gegensatz zum herkömmlichen Rund- oder Ringbuckel, dessen Kontaktfläche die Blechoberfläche des zweiten Werkstückes ist, und der mit dieser stets parallel liegen und lotrecht gegen diese gepresst werden muss, ist bei der Verwendung der erfindungsgemässen Langbuckel die genaue gegenseitige Ausrichtung nicht notwendig; die punktförmige Berührung der sich kreuzenden Buckel ist immer gewährleistet. Die Verschiebung $d_2$ während des Zusammendrückens der Buckel 5, 6 wird von der sich gleichzeitig aus dem Berührungspunkt der Buckel rasch ausbreitenden, teigigen Schweisslinse aufgefangen.

Eine gegenseitige Verschiebung der zu verschweissenden Werkstücke und damit auch der Buckel tritt nicht nur bei Werkstücken mit in verschiedenen Ebenen liegenden Schweisspunkten auf, sondern auch bei langgestreckten Bauteilen. Infolge von fertigungsbedingten Ungenauigkeiten der Buckel und der Werkstücke, können die Buckel auch bei ebenen Werkstücken nie in der eigentlich gewünschten Präzision auf dem Gegenwerkstück aufliegen. Dasselbe trifft auch für die gegenseitige Lage der Elektroden und der Werkstücke zu.

Die Elektroden, in den Figuren nicht dargestellt, können aus einer Reihe paarweise zusammenwirkender stempelförmiger Elektroden bestehen, wobei für jedes Buckelpaar ein Elektrodenpaar vorgesehen sein kann; es können aber auch grossflächige, alle Buckel gemeinsam beaufschlagende Elektrodenflächen vorgesehen werden.

In Fig. 11 sind die Schweisslinsen 7 als langgezogene Ellipsen ersichtlich. Ihre grösste Ausdehnung entspricht wenigstens der Länge der Basis der Buckel 5 und 6; sie kann aber je nach der Höhe des Schweissstromes sowie der Stromflussdauer grösser sein, d. h. auch den die Buckel umgebenden Bereich umfassen.

In anderen Anwendungsfällen, z. B. zum Schweissen von aus zwei Halbschalen 11, 12 zusammengesetzten Rohrbögen 10 für Lüftungsanlagen, für Dachwasserleitungen oder Kaminrohre kann die erfindungsgemässe Buckelanordnung ebenfalls sehr vorteilhaft angewendet werden. Längs der Kanten der Halbschale 11 wird in geringem Abstand zur Kante eine Sicke 15 eingeprägt ; längs der Kanten der Halbschale 12 werden im wesentlichen rechtwinklig zur Kante ausgerichtete Strichbuckel 16 vorgesehen. Vorzugsweise weist die Gesamtlänge aller Strichbuckel 16 ungefähr den gleichen Betrag wie die Länge der Sicke 15 auf. Der Abstand zwischen den Strichbuckeln 16 entspricht demnach etwa deren Länge. In der beschriebenen Ausführung angebrachte Buckel 16, bzw. Sicken 15 ergeben nach der Verschweissung eine Naht, welche für den vorliegenden Fall genügende Festigkeit und Dichtigkeit aufweist.

Aus der Figur 14 ist ersichtlich, dass die von den Querbuckeln 16 ausgehenden Schweisslinsen sich zu einer durchgehenden dichten Naht ausgebildet haben.

Je nach der Grösse und Radius der Rohrbögen können diese in einem einzigen Arbeitsgang mit kreisförmigen Elektroden oder aber in zwei bis drei Schritten mit entsprechend kleineren kreissegmentförmigen Elektroden geschweisst werden. Selbstverständlich kann die Kombination von kurzen Strichbuckeln 16 mit einem langen sickenartigen Buckel 15 auch an ebenen oder rohrförmigen Werkstücken, z. B. Luftkanälen, Anwendung finden.

## Patentansprüche

1. Buckelanordnung zum Mehrfachbuckelschweissen von zwei im wesentlichen gleich dicken Werkstücken aus Stahl, rostfreiem Stahl, Aluminium, Messing oder beschichteten Metallen, insbesondere zum Schweissen von langgestreckten oder grossflächigen Tiefziehteilen mit einer Mehrzahl von in den Werkstücken hohl eingeprägten Buckeln, dadurch gekennzeichnet, dass den ersten Buckeln (5, 15) auf dem ersten Werkstück (1, 11) ein im wesentlichen gleichartiger zweiter Buckel (6, 16) auf dem zweiten Werkstück (2, 12) gegenüberliegend vorgesehen ist, wobei sich die Scheitellinien der zweiten Buckel (6, 16) des zweiten Werkstückes (2, 12) und die Scheitellinien der ersten Buckel (5, 15) des ersten Werkstückes (1, 11) kreuzen und gegenseitig nur in punktförmiger Berührung stehen.

2. Buckelanordnung nach Anspruch 1, dadurch gekennzeichnet, dass die Scheitellinien der ersten Buckel (5, 15) die Scheitellinien der zweiten Buckel (6, 16) im wesentlichen rechtwinklig kreuzen.

3. Buckelanordnung nach Anspruch 1, dadurch gekennzeichnet, dass die ersten bzw. zweiten Buckel (5, 15 ; 6, 16) strichförmig ausgebildet sind.

4. Buckelanordnung nach Anspruch 1, dadurch gekennzeichnet, dass die ersten bzw. zweiten Buckel (5, 15 ; 6, 16) bogenförmig ausgebildet sind.

5. Buckelanordnung nach Anspruch 1, dadurch gekennzeichnet, dass auf dem ersten Werkstück (11) die ersten Buckel als eine durchgehende Sicke (15) und dass auf dem zweiten Werkstück (12) die zweiten Buckel als in einer Linie angeordnete parallel nebeneinanderliegende Strichbuckel (16) ausgebildet sind.

6. Buckelanordnung nach Anspruch 5, dadurch gekennzeichnet, dass der Abstand zwischen den Strichbuckeln (16) im wesentlichen der Länge der Strichbuckel (16) entspricht.

## Claims

1. A projection arrangement for the multiple projection welding of two substantially equally thick workpieces of steel, stainless steel, aluminium, brass or coated metals, particularly for the welding of elongated or large-area deep-drawn parts with a plurality of projections concavely impressed in the workpieces, characterised in that provided opposite the first projections (5, 15) on the first workpiece (1, 11) is a substantially similar second projection (6, 16) on the second workpiece (2, 12), while the crown lines of the second projection (6, 16) of the second workpiece (2, 12) and the crown lines of the first projection (5, 15) of the first workpiece (1, 11) cross and are mutually only in point contact.

2. A projection arrangement as claimed in claim 1, characterised in that the crown lines of the first projection (5, 15) and the crown lines of the second projection (6, 16) cross substantially at right angles.

3. A projection arrangement as claimed in claim 1, characterised in that the first and/or second projections (5, 15 ; 6, 16) are stroke- or streak-like in construction.

4. A projection arrangement as claimed in claim 1, characterised in that the first and/or second projections (5, 15 ; 6, 16) are arcuate in construction.

5. A projection arrangement as claimed in claim 1, characterised in that, on the first workpiece (11), the first projection is made in the form of a continuous bead (15) and that, on the second workpiece (12), the second projection is made in the form of stroke- or streak-like projections (16) situated parallel to one another, side by side and disposed in a line.

6. A projection arrangement as claimed in claim 5, characterised in that the spacing between the stroke- or streak-like projections (16) corresponds substantially to the length of the stroke- or streak-like projections (16).

## Revendications

1. Disposition de bossages pour le soudage par bossages multiples de deux pièces sensiblement de même épaisseur, en acier, acier inoxydable, aluminium, laiton, ou métal revêtu, en particulier pour le soudage d'éléments de grande longueur ou de grande surface, obtenus par emboutissage profond, plusieurs bossages en creux étant pratiqués dans les pièces, caractérisée en ce qu'en face du premier bossage (5, 15) de la première pièce (1, 11) est prévu un deuxième bossage (6, 16) sensiblement semblable sur la deuxième pièce (2, 12), de sorte que les lignes de sommets des deuxièmes bossages (6, 16) de la deuxième pièce (2, 12) et les lignes de sommets des premiers bossages (5, 15) de la première pièce (1, 11) se croisent et ne sont réciproquement en contact que par points.

2. Disposition de bossages selon la revendication 1, caractérisée en ce que les lignes des sommets des premiers bossages (5, 15) croisent sensiblement à angle droit les lignes des sommets des deuxièmes bossages (6, 16).

3. Disposition de bossages selon la revendication 1, caractérisée en ce que les premiers et deuxièmes bossages (5, 15 ; 6, 16) ont la forme de barres.

4. Disposition de bossages selon la revendication 1, caractérisée en ce que les premiers et deuxièmes bossages (5, 15 ; 6, 16) ont la forme d'arcs.

5. Disposition de bossages selon la revendication 1, caractérisée en ce que sur la première pièce (11) les premiers bossages forment une moulure continue (15) et en ce que sur la deuxième pièce (12) les deuxièmes bossages sont des bossages-barres (16) proches les uns des autres, parallèles et disposés en une ligne.

6. Disposition de bossages selon la revendication 5, caractérisée en ce que la distance entre les bossages-barres (16) correspond sensiblement à leur longueur.

Fig. 1

Fig. 2    Fig. 4    Fig. 6    Fig. 8

Fig. 3    Fig. 5    Fig. 7    Fig. 9

Fig. 1a    Fig. 11

0 102 927

Fig. 12

10

11

XIV

XIV

12

Fig. 13

15    16

11    12

15    16

Fig. 14

2